# EUROPEAN PATENT SPECIFICATION

(11) **EP 2 979 593 B1**
(45) Date of publication and mention of the grant of the patent: **18.10.2017**
(21) Application number: 15178539.1
(22) Date of filing: 27.07.2015
(51) Int. Cl.: A47J 31/60

(54) **FILTER CARTRIDGE FOR MACHINE FOR THE PREPARATION OF BEVERAGES**
FILTERPATRONE FÜR MASCHINE ZUR HERSTELLUNG VON GETRÄNKEN
CARTOUCHE DE FILTRE POUR MACHINE DE PRÉPARATION DE BOISSONS

(30) Priority: 01.08.2014 IT PD20140213
(43) Date of publication of application: 03.02.2016
(73) Proprietor: Laica S.p.A., 36021 Barbarano Vicentino (VI) (IT)
(72) Inventor: MORETTO, Maurizio, 36100 Vicenza (IT)
(74) Representative: Locas, Davide

(56) References cited:
- EP-A1- 1 340 442
- EP-A1- 1 498 060
- WO-A1-2014/131905

## Description

The invention relates to a filter cartridge for a machine for the preparation of beverages, of the type suitable for being received in a reservoir which is connected to the supply circuit of the machine for processing the water present therein.

In the context of the present technical field, it is known to use machines for the preparation of coffee and, in general, of hot beverages, which are provided with a reservoir which is intended to contain the water required for the preparation of the beverage. The presence of the reservoir is typically required in machines for domestic use in order to avoid the connection of the machine to the water supply network and at the same time to ensure a quantity of water sufficient to obtain an adequate number of coffees. In order to improve the quality of the water present in the reservoir, e.g. by eliminating the impurities present therein or softening it, it is further known to use filtration systems having a replaceable cartridge in the coffee machines.

Typically, the cartridge filter is received in a removable manner in the reservoir and the water is caused to flow through the filtering material present in the cartridge, using, for example, a suction type mechanism. In the suction type systems, therefore, the water is drawn in towards the boiler of the coffee machine, passing through the filter which, for that purpose, is inserted in a tight manner in a discharge opening of the reservoir.

In order to allow a complete use the content of the reservoir, the discharge opening, in the region of which the filter is inserted in a tight manner, is positioned at the bottom of the reservoir. Still for the same purpose, the filter has both an inlet and an outlet arranged near the bottom of the reservoir.

There is therefore defined inside the filter a path which extends completely through the filter and connects the inlet to the outlet by passing through the filtering material.

An example of a filter which uses that filtration mechanism is described in European Patent EP 1340442.

However, it must be noted that, in that filter, the filtering material is in the form of granules. As a consequence it may happen that during the passage from the inlet to the outlet the water forms canalizations, i.e. channels inside the filtering material in which material is absent or is present at a lesser density.

Once those canalizations have been formed, for obvious physical reasons, the water tends to use the passage defined thereby as a preferred course, therefore making the flow of water inside the filtering bed not very uniform. Consequently, the consumption of the filtering material will also not be homogeneous, there in fact being defined zones in which the material is greatly exhausted and which are subjected to the preferred passage of the water, in alternation with zones in which the material will still be active but not used because the water passes through it only to a minimal extent.

In those cases, therefore, premature exhaustion of the cartridge occurs, or at least non-optimum use of the material present therein.

The technical problem addressed by the present invention is therefore to provide a filter cartridge for machines for the preparation of coffee which is structurally and functionally configured to overcome all the disadvantages set out with reference to the cited prior art.

This problem is solved by means of a filter cartridge for machines for the preparation of beverages constructed in accordance with claim 1.

Preferred features of the invention are defined in the dependent claims. The invention according to the present invention allows optimum use of the filtering material present inside the cartridge, with uniform exhaustion thereof.

In addition, in the filter cartridge according to the present invention there is reduced the production of preferred passages inside the cartridge, with a consequent reduction in the phenomena of canalization which take place in the cartridges produced according to the prior art.

The features and additional advantages of the invention will be better appreciated from the following detailed description of a preferred but non-exclusive embodiment thereof which is illustrated by way of non-limiting example with reference to the appended drawings, in which:
- Figure 1 is a perspective view of a filter cartridge for machines for the preparation of beverages according to the present invention;
- Figures 2 and 2A are a side view and a relevant cross-section of the filter cartridge of Figure 1, respectively;
- Figure 3 is a plan view of the filter cartridge of Figure 1;
- Figure 4 is a side view of an outer housing, a detail of the filter cartridge of Figure 1;
- Figures 5, 5A and 5B are a side view, a plan view and a bottom view, respectively, of a tubular member, which is a detail of the filter cartridge of Figure 1 and which is intended to be received inside the outer chamber of Figure 4; and
- Figure 6 is a side view of a closure element, a detail of the filter cartridge of Figure 1.

With reference to the Figures, a filter cartridge for machines for the preparation of hot beverages, such as, for example, coffee, tea or barley coffee (orzo), is generally designated 100.

The filter cartridge 100 is of the type suitable for being installed in a reservoir which is intended to contain water to be used for the preparation of the beverage, which are not illustrated in the Figures.

To that end, the filter cartridge 100 comprises a connection element 5 with respect to a relevant seat or, more generally, to an engagement portion, preferably constructed at the bottom of the reservoir.

In the present embodiment, the connection element 5 is constructed by means of a hexagonal portion, which engages in a removable manner in a seat having a complementary shape. It is evident that there may also be provided connection elements having different characteristics, such as, for example, a screw thread or a bayonet type system.

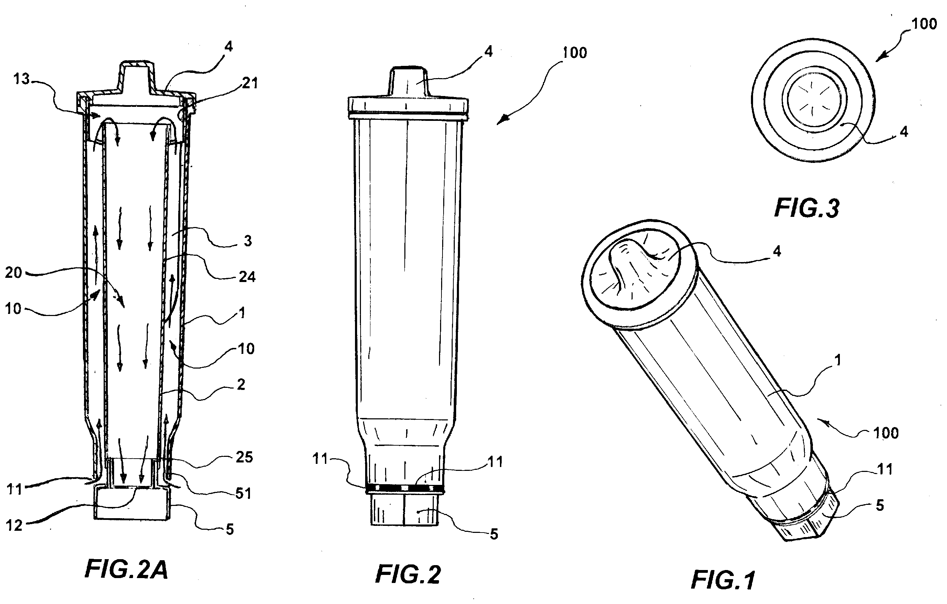

Then, also with reference to Figures 2 and 2A, the filter cartridge 100 comprises an outer housing 1, of elongate form, inside which there is received filtering material, such as, for example, ion exchange resins.

The filter cartridge 100 further comprises an inlet 11 for drawing in water to be filtered and an outlet 12 for discharging water which has been filtered.

Preferably, the inlet 11 and the outlet 12 are constructed in the region of the same end of the cartridge 100, which, during use, is arranged adjacent to the bottom of the reservoir.

The inlet 11 and outlet 12 are connected by means of a filtration path which is designated 10 and 20 in Figure 2A and the characteristics of which will be set out in greater detail below.

The arrangement of the outlet 12 is such that it is arranged so as to be directed towards the seat formed on the bottom of the reservoir in such a manner that the water introduced from the inlet 11 flows towards the circuit of the coffee machine through the outlet 12 after passing along the filtration path 10, 20 and the filtering material present inside the housing.

According to a preferred embodiment, the inlet and/or outlet comprise/s a mesh or slot type filter, through which the water may pass but not the filtering material, thereby being retained inside the cartridge 100.

The cartridge 100 further comprises a tubular body 2 which is arranged inside the housing 1 which separates the inlet 11 with respect to the outlet 12 in the region of the connecting extremities 5. In this manner, there is defined between the outer housing and the tubular body 2 an outer chamber 10, inside which the filtering material is preferably received. The tubular body has a longitudinal extent which is less than that of the outer housing, in such a manner that, in the region of the extremity of the cartridge 100 at which the connection element 5 is defined, it separates the inlet and outlet, while, in the region of the opposite end, there remains defined a passage 13 for the water which places the chamber 10 in communication with an internal portion 20 of the tubular body 2. Preferably, the filtration material is present both in the chamber 10 and inside the tubular body 2.

Therefore, it is evident that, in the present embodiment, the filtration path is defined by the chamber 10 and the internal portion 20 with respect to the tubular body 2.

In any case, it will be apparent that more in general the filtering material can be housed at least along a limited portion of the filtration path, either located in the outer chamber 10 or in the internal portion 20.

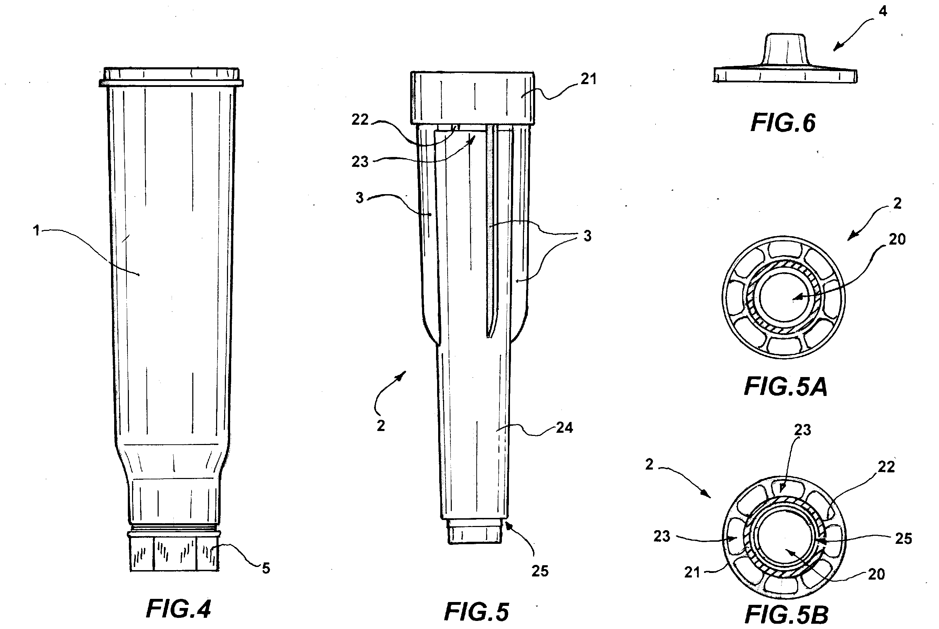

With reference now to Figure 5, the filter cartridge according to the present invention further comprises a plurality of partition elements 3 which, according to a preferred embodiment, extend radially from the tubular body 2 towards the outer housing 1. It will be anyhow apparent that according to an alternative embodiment the partition elements 3 can extend radially from the outer housing 1 towards the tubular body 2.

The partition elements 3 allow subdivision of the outer chamber 10 or, more in general, the portion of the filtration path in which the filtering material is housed, into a plurality of respective sectors, thereby defining a series of compulsory passages for the water between the inlet 11 and outlet 12.

The Applicant has observed that subdividing the portion of the filtration path in which the filtering material is housed into sectors results in a reduction of the phenomenon of canalization, because the filtering material has less freedom of movement and therefore it is more difficult to produce preferential passages for the water.

According to an embodiment, the partition elements 3 are in the form of fins, that is to say, they have a planar shape.

Preferably, the partition elements 3 extend in a direction parallel with the longitudinal extent axis X of the filter cartridge 100 over such a length that they cover a part portion of the outer chamber 10 of the filtration path. In other words, the partition elements 3 extend as far as the other half of the outer chamber 10 in the direction of the axis X.

Furthermore, the extent of the partition elements 3 in the direction of the longitudinal extent axis X is preferably shorter than the total length of the outer chamber 10. In that manner, the portion of the outer chamber 10 near the inlet 11 is not partitioned, allowing a better flow of the water being drawn into the cartridge 100.

Still according to a preferred embodiment, the partition elements 3 extend in a radial direction until they come into contact with the outer housing 1. It is thus evident that, in particular in the case in which the cartridge is constructed by assembling an outer housing and a tubular body, which are mutually formed as separate bodies, the radial extent of the partition elements 3 may be such that they extend as far as a position adjacent to the internal side wall of the housing 1, thereby leaving at least a minimum distance between partition elements 3 and the housing 1.

In that manner, the assembly may be brought about in a simple manner, yet obtaining the subdivision of the filtering material as illustrated above.

With reference now to Figures 5, 5A and 5B, the tubular body 2 comprises a collar 21 which is connected to a tubular portion 24 of the tubular body 2, which defines the second path portion 20. The connection is preferably brought about by means of a plurality of radial connection elements 22 which separate passages 23 for the water from each other.

The collar 21 has dimensions and is positioned so as to be arranged in abutment with the side wall of the outer housing 1.

According to a preferred embodiment, the partition elements 3 extend in an axial direction from the collar 21 and are preferably formed as axial extensions of the connection elements 22.

The presence of the collar therefore allows the tubular body 2 to be maintained in a coaxial state, or at least correctly positioned, with respect to the outer housing 1. In this manner, modifications which would make the flow of the water over the filtration path less uniform can be prevented in the form of the chamber defined between them.

Furthermore, according to a preferred embodiment, the connection elements 22 are present in a larger number than the partition elements 3and are preferably of a thickness greater than them.

That solution is found to be particularly advantageous if the cartridge is constructed by forming the tubular body 2 and the housing 1 as separate bodies and subsequently assembling them by inserting one inside the other. In that case, a sufficient level of strength may be ensured for the structure and the risk of bending the partition elements 3 is limited, damage to which could compromise the correct operation of the cartridge.

Still in order to facilitate the assembly, the tubular body 2 preferably comprises a coupling element 25 which is arranged in the region of an extremity of the tubular body 2 itself and which is intended to connect it to the outer housing 1, in the region of the opposite extremity to the one at which the collar 21 is constructed.

In the present embodiment, the coupling element is constructed by means of a circular seat 25 which is capable of receiving the extremity of a second collar 51 which is constructed on the housing 1, in the region of the outlet 12.

The combined presence of a collar 21 and a coupling element 25 therefore allows the positioning of the tubular body 2 inside the housing 1 to be made particularly simple.

The assembly of the cartridge according to the present invention may therefore be brought about simply by inserting the tubular body 2 inside the housing 1, in a state guided by the collar 21 and the coupling element 25. Once those components are united, the filtering material can be introduced and therefore the outer housing can be closed by means of a closure element 4, preferably in the form of a cover, illustrated in Figure 6.

Thus, the invention solves the problem set out, at the same time resulting in a plurality of advantages. The presence of the partition elements 3 in fact prevents or at least limits the phenomena of canalization which are brought about in the filter cartridges which are constructed according to the prior art. Furthermore, the configuration of the partition elements used in the preferred embodiment of the invention ensures in any case optimum flow of water inside the cartridge as well as adequate filtration.

Finally, the structure of the cartridge according to the present invention is particularly suitable for being brought about by means of stamping of single elements which can be readily assembled together, in any case ensuring a high level of strength and quality.

## Claims

1. A filter cartridge (100) for a machine for the preparation of beverages comprising an outer housing (1) extending predominantly axially to house filtering material, a connecting extremity (5) to a reservoir of the machine, an inlet (11) for the introduction of water which has to be filtered and an outlet (12) for the discharge of filtered water, a tubular body (2) housed within the outer housing (1) in such a way as to separate the inlet (11) and the outlet (12) in the vicinity of the connecting extremity (5) and to define a filtration path (10, 20) which places the inlet (11) and the outlet (12) in communication, the filtering material being housed at least along a portion of said filtration path (10, 20),
**characterized in that** it further comprises a plurality of partition elements (3) which extend radially from the tubular body (2) or from the outer housing (1) so as to divide said portion housing said filtering material into a plurality of respective sectors.

2. A filter cartridge (100) according to claim 1, wherein there is defined an outer chamber (10) between the outer housing and the tubular body, the filtering material being housed within the outer chamber (10), partition elements (3) extending inside said outer chamber (10).

3. A filter cartridge (100) according to claim 1 or 2, wherein the filtering material is further housed within the tubular body (2) which defines a second portion (20) of the filtration path (10, 20).

4. A filter cartridge (100) according to any of the preceding claims, wherein the partition elements (3) are in the form of fins.

5. A filter cartridge (100) according to any of the preceding claims, wherein the partition elements (3) extend in a direction parallel to an axis (X) of longitudinal extension of the filter cartridge (100)

6. A filter cartridge (100) according to claim 5, wherein said portion housing said filtering material and along which said the partition elements (3) extends over a predominant part of the filtration path.

7. A filter cartridge (100) according to claim 5 or 6, wherein the partition elements (3) extend in the direction of said axis (X) over a length shorter than that of the outer chamber (10).

8. A filter cartridge (100) according to any of the preceding claims, wherein the partition elements (3) extend in a radial direction in such a way as to be adjacent to or in contact with the outer housing (1).

9. A filter cartridge (100) according to any of the preceding claims, wherein the tubular body (2) comprises a collar (21) connected to a tubular portion (24) of the tubular body (2) through a plurality of radial connection elements (22) which define corresponding passages (23) for the water, the collar (21) being arranged in abutment against an inner side wall of the outer housing (1).

10. A filter cartridge (100) according to claim 9, wherein the connection elements (22) are present in a larger number than the partition elements (3).

11. A filter cartridge (100) according to any of the preceding claims, wherein the tubular body (2) further comprises a coupling element (25) located at one extremity of the tubular body (2) and capable of connecting the tubular body (2) to the outer housing (1) at that extremity.

## Patentansprüche

1. Filterkartusche (100) für eine Maschine zur Aufbereitung von Getränken mit einem Außengehäuse (1), dass sich überwiegend axial erstreckt, um Filtermaterial aufzunehmen, einem Verbindungsende (5) für einen Vorratsbehälter der Maschine, einem Einlass (11) zur Einleitung von Wasser, das gefiltert werden muss, und einem Auslass (12) zur Abgabe des gefilterten Wassers, einem rohrförmigen Körper (2), der innerhalb des Außengehäuses (1) derart aufgenommen ist, um den Einlass (11) und den Auslass (12) in der Umgebung des Verbindungsendes (5) zu trennen und um einen Filtrierweg (10, 20) zu definieren, der den Einlass (11) mit dem Auslass (12) verbindet, wobei das Filtermaterial zumindest entlang eines Bereichs des Filtrierwegs (10, 20) aufgenommen ist, **dadurch gekennzeichnet, dass** sie ferner eine Mehrzahl von Trennelementen (3) aufweist, die sich radial vom rohrförmigen Körper (2) oder vom Außengehäuse (1) erstrecken, um so den Bereich, der das Filtermaterial aufnimmt, in eine Mehrzahl von jeweiligen Abschnitten zu teilen.

2. Filterkartusche (100) gemäß Anspruch 1, wobei eine Außenkammer (10) zwischen dem Außengehäuse und dem rohrförmigen Körper gebildet ist, das Filtermaterial innerhalb der Außenkammer (10) aufgenommen ist, sich die Trennelemente (3) innerhalb der Außenkammer (10) erstrecken.

3. Filterkartusche (100) gemäß Anspruch 1 oder 2, wobei das Filtermaterial ferner innerhalb des rohrförmigen Körpers (2) aufgenommen ist, der einen zweiten Bereich (20) des Filtrierwegs (10, 20) definiert.

4. Filterkartusche (100) gemäß einem der vorhergehenden Ansprüche, wobei die Trennelemente (3) in der Form von Rippen sind.

5. Filterkartusche (100) gemäß einem der vorhergehenden Ansprüche, wobei sich die Trennelemente (3) in eine Richtung erstrecken, die parallel zu einer Achse (X) einer Längsausdehnung der Filterkartusche (100) sind.

6. Filterkartusche (100) gemäß Anspruch 5, wobei der Bereich das Filtermaterial aufnimmt und entlang dem sich die Trennelemente (3) über einem überwiegenden Teil des Filtrierweges erstrecken.

7. Filterkartusche (100) gemäß Anspruch 5 oder 6, wobei sich die Trennelemente (3) in die Richtung der Achse (X) über eine Länge erstrecken, die kürzer ist als die der Außenkammer (10).

8. Filterkartusche (100) gemäß einem der vorhergehenden Ansprüche, wobei sich die Trennelemente (3) in eine radiale Richtung derart erstrecken, um benachbart zum oder in Kontakt mit dem Außengehäuse (1) zu sein.

9. Filterkartusche (100) gemäß einem der vorhergehenden Ansprüche, wobei der rohrförmige Körper (2) einen Kragen (21) aufweist, der mit einem rohrförmigen Bereich (24) des rohrförmigen Körpers (2) durch eine Mehrzahl von radialen Verbindungselementen (22) verbunden ist, die jeweilige Durchgänge (23) für das Wasser bilden, wobei der Kragen (21) in Anlage mit einer inneren Seitenwand des Außengehäuses (1) angeordnet ist.

10. Filterkartusche (100) gemäß Anspruch 9, wobei die Verbindungselemente (22) in einer größeren Anzahl als die Trennelemente (3) vorhanden sind.

11. Filterkartusche (100) gemäß einem der vorhergehenden Ansprüche, wobei der rohrförmige Körper (2) ein Kupplungselement (25) aufweist, das an einem Ende des rohrförmigen Körpers (2) angeordnet ist und den rohrförmigen Körper (2) mit dem Außengehäuse (1) an diesem Ende verbinden kann.

## Revendications

1. Cartouche de filtre (100) pour une machine de préparation de boissons comprenant un boîtier extérieur (1) s'étendant de manière prédominante axialement pour loger un matériau filtrant, une extrémité de raccordement (5) à un réservoir de la machine, une entrée (11) pour l'introduction d'eau qui doit être filtrée et une sortie (12) pour l'évacuation d'eau filtrée, un corps tubulaire (2) logé dans le boîtier extérieur (1) de manière à séparer l'entrée (11) et la sortie (12) à proximité de l'extrémité de raccordement (5) et à définir une voie de filtration (10, 20) qui place l'entrée (11) et la sortie (12) en communication, le matériau filtrant étant logé au moins le long d'une partie de ladite voie de filtration (10, 20),
**caractérisée en ce qu'**elle comprend en outre une pluralité d'éléments de séparation (3) qui s'étendent radialement du corps tubulaire (2) ou du boîtier extérieur (1) de sorte à diviser ladite partie logeant ledit matériau filtrant en une pluralité de secteurs respectifs.

2. Cartouche de filtre (100) selon la revendication 1, dans laquelle il est défini une chambre extérieure (10) entre le boîtier extérieur et le corps tubulaire, le matériau filtrant étant logé dans la chambre extérieure (10), des éléments de séparation (3) s'étendant dans ladite chambre extérieure (10).

3. Cartouche de filtre (100) selon la revendication 1 ou 2, dans laquelle le matériau filtrant est en outre logé dans le corps tubulaire (2) qui définit une seconde partie (20) de la voie de filtration (10, 20).

4. Cartouche de filtre (100) selon l'une quelconque des revendications précédentes, dans laquelle les éléments de séparation (3) sont sous la forme d'ailettes.

5. Cartouche de filtre (100) selon l'une quelconque des revendications précédentes, dans laquelle les éléments de séparation (3) s'étendent dans une direction parallèle à un axe (X) d'extension longitudinale de la cartouche de filtre (100).

6. Cartouche de filtre (100) selon la revendication 5, dans laquelle ladite partie logeant ledit matériau filtrant et le long de laquelle les éléments de séparation (3) s'étendent sur une partie prédominante de la voie de filtration.

7. Cartouche de filtre (100) selon la revendication 5 ou 6, dans laquelle les éléments de séparation (3) s'étendent dans la direction dudit axe (X) sur une longueur plus courte que celle de la chambre extérieure (10).

8. Cartouche de filtre (100) selon l'une quelconque des revendications précédentes, dans laquelle les éléments de séparation (3) s'étendent dans une direction radiale de manière à être adjacents ou en contact avec le boîtier extérieur (1).

9. Cartouche de filtre (100) selon l'une quelconque des revendications précédentes, dans laquelle le corps tubulaire (2) comprend un collier (21) raccordé à une partie tubulaire (24) du corps tubulaire (2) au travers d'une pluralité d'éléments de raccordement radial (22) qui définissent des passages correspondants (23) pour l'eau, le collier (21) étant agencé en butée contre une paroi latérale intérieure du boîtier extérieur (1).

10. Cartouche de filtre (100) selon la revendication 9, dans laquelle les éléments de raccordement (22) sont présents dans un plus grand nombre que les éléments de séparation (3).

11. Cartouche de filtre (100) selon l'une quelconque des revendications précédentes, dans laquelle le corps tubulaire (2) comprend en outre un élément de couplage (25) situé à une extrémité du corps tubulaire (2) et apte à raccorder le corps tubulaire (2) au boîtier extérieur (1) à cette extrémité.
